# FASCICULE DE BREVET EUROPEEN

(11) **EP 1 350 227 B1**
(45) Date de publication et mention de la délivrance du brevet: **15.04.2009**
(21) Numéro de dépôt: 02710958.6
(22) Date de dépôt: 09.01.2002
(51) Int. Cl.: G07C 9/00, G06K 9/00

(54) **DISPOSITIF D'IDENTIFICATION OPTIQUE**
OPTISCHE IDENTIFIKATIONSVORRICHTUNG
OPTICAL IDENTIFICATION DEVICE

(30) Priorité: 10.01.2001 FR 0100247
(43) Date de publication de la demande: 08.10.2003
(73) Titulaire: SAGEM Sécurité, 75015 Paris (FR)
(72) Inventeur: GUICHARD, Stéphane, F-78570 ANDRESY (FR)
(74) Mandataire: Fruchard, Guy
(86) Numéro de dépôt international: PCT/FR2002/000064
(87) Numéro de publication internationale: WO 2002/056261

(56) Documents cités:
- EP-A- 0 758 776
- EP-A- 1 020 811
- WO-A-94/22371
- US-A- 5 956 122
- US-A- 6 119 096
- PATENT ABSTRACTS OF JAPAN vol. 018, no. 379 (P-1771), 15 juillet 1994 (1994-07-15) & JP 06 103368 A (MATSUMURA ELECTRON:KK), 15 avril 1994 (1994-04-15)

## Description

La présente invention concerne un dispositif d'identification optique destiné par exemple à être associé à un dispositif d'autorisation d'accès à un local à accès réglementé.

On connaît des dispositifs d'identification optique comprenant une caméra numérique qui est disposée à proximité de l'entrée du local à accès réglementé et qui est reliée à un écran de contrôle permettant à un opérateur de visualiser à distance les personnes se présentant à l'entrée du local et d'autoriser l'accès au local aux personnes ayant le droit d'y accéder. Ces dispositifs présentent l'inconvénient dans les lieux à forte fréquentation de nécessiter la présence permanente d'un opérateur.

Il a donc été développé des systèmes de reconnaissance automatique de visage qui sont couplés aux caméras numériques pour identifier de façon automatique les personnes se présentant à l'entrée du local et autoriser l'accès de celles qui ont été reconnues comme ayant le droit d'accéder à celui-ci. Ces systèmes de reconnaissance automatique de visage comprennent une mémoire contenant des caractéristiques en particulier dimensionnelles des visages et permettent une identification sans intervention d'un opérateur par comparaison des caractéristiques du visage visualisé avec celles contenues dans la mémoire. Cependant, il existe un risque qu'une personne normalement autorisée à accéder au local se voie refuser l'accès de celui-ci en raison d'une non reconnaissance de son visage par le système. Ceci résulte par exemple du fait que la personne porte des lunettes, ou un couvre-chef ou bien encore que son visage présente une altération temporaire telle qu'un hématome, ce qui fausse la reconnaissance.

Il existe également des dispositifs d'identification par reconnaissance automatique d'empreintes digitales qui sont particulièrement efficaces. Toutefois, ces dispositifs ne peuvent permettre l'accès qu'aux personnes dont les empreintes sont mémorisées dans la base de données du dispositif de reconnaissance de sorte qu'une personne nouvellement autorisée ne pourra accéder au local qu'une fois la base de données du dispositif mise à jour. Par ailleurs, ces dispositifs nécessitent que les personnes désirant accéder au local s'arrêtent pour appliquer leurs mains sur le capteur prévu à cet effet afin de permettre la reconnaissance de leurs empreintes digitales. Le temps de traitement est en outre relativement long. Ces inconvénients sont particulièrement gênants lorsque le dispositif d'identification autorise l'accès à un local très fréquenté.

Il est connu du document EP-A-1 020 811, un système d'identification combinant une capture d'image d'un visage et une capture d'image d'un iris.

Un but de l'invention est de fournir un moyen simple pour permettre une identification optique rapide et fiable en optimisant la commande du dispositif d'identification entre les modes d'identification du visage et d'identification des empreintes.

En vue de la réalisation de ce but, on prévoit, selon l'invention telle que définie par l'objet des revendications 1 et 3, un dispositif d'identification optique comprenant une caméra numérique, la caméra possédant un organe de changement de focale entre au moins une focale d'observation visuelle et une focale de reconnaissance d'empreinte, et le dispositif comprenant un système de reconnaissance automatique d'empreinte qui est relié à la caméra pour être activé lorsque la caméra est dans sa focale de reconnaissance d'empreinte.

Ainsi, lorsque la focale d'observation visuelle est utilisée, il est possible d'obtenir une image du visage de la personne à identifier alors que celle-ci est encore relativement éloignée de la caméra et se déplace vers celle-ci. Cette focale est par exemple utilisée lors des périodes de forte fréquentation. Avec la focale de reconnaissance d'empreinte, il est possible de réaliser une reconnaissance automatique d'empreinte (on entend par empreinte tout type d'empreinte et par exemple digitale ou irienne) et en cas d'échec de la reconnaissance automatique, la focale d'observation visuelle peut être utilisée pour permettre une reconnaissance par un opérateur. On dispose alors d'un système d'identification relativement simple et fiable.

Selon un premier mode de réalisation de l'invention, le dispositif comprend une vitre montée devant la caméra et associée à des moyens de commande de l'organe de changement de focale.

Ainsi, l'organe de changement de focale peut être commandé par l'utilisateur appliquant sa main ou une partie de celle-ci contre la vitre. Ceci permet notamment de s'assurer que la main se trouve à une distance et dans une position correctes par rapport à la caméra pour permettre une visualisation de l'empreinte suffisante pour une reconnaissance de celle-ci.

Selon un deuxième mode de réalisation particulier, le dispositif comporte un système de reconnaissance automatique de visages relié à la caméra pour être activable lorsque la caméra est dans la focale d'observation visuelle, et de préférence des moyens pour commander l'organe de changement de focale pour passer de la focale d'observation visuelle à la focale de reconnaissance d'empreinte en cas d'échec de la reconnaissance automatique de visage et de la focale de reconnaissance d'empreinte à la focale d'observation visuelle en cas d'échec de la reconnaissance automatique d'empreinte.

Ainsi, le changement de focale est automatique en cas d'échec de la reconnaissance en cours.

De préférence, le dispositif comprend des moyens pour commander l'organe de changement de focale pour passer de la focale de reconnaissance d'empreinte à la focale d'observation visuelle sans reconnaissance automatique de visage en cas d'échec de la reconnaissance automatique de visage et de la reconnaissance automatique d'empreinte.

Il est alors possible d'alerter un opérateur pour que celui-ci procède à une reconnaissance visuelle du visage de la personne à identifier.

D'autres caractéristiques et avantages de l'invention ressortiront à la lecture de la description qui suit de modes de réalisation particuliers non limitatifs de l'invention.

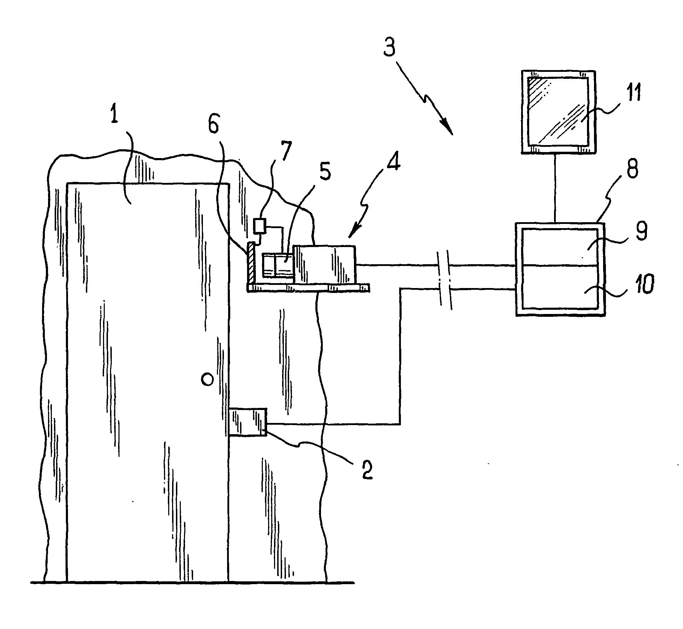

Il sera fait référence à la figure unique annexée représentant schématiquement un dispositif d'identification optique conforme à l'invention.

Le dispositif d'identification conforme à l'invention est ici décrit en relation avec un dispositif d'autorisation d'accès à un local fermé par une porte 1. Le dispositif d'autorisation d'accès comprend par exemple une serrure 2 commandée électriquement et reliée au dispositif d'identification conforme à l'invention généralement désigné en 3.

Le dispositif d'identification comprend une caméra numérique 4 fixée à proximité de la porte 1. La caméra numérique 4 est du type à capteurs CCD et comprend un organe de changement de focale 5 entre une première focale adaptée à permettre la visualisation du visage d'une personne arrivant vers la porte 1 et une deuxième focale adaptée à permettre la visualisation d'une empreinte digitale de celle-ci. La caméra peut ainsi être équipée d'un zoom motorisé entre deux focales prédéfinies.

Une vitre 6 est montée devant l'objectif de la caméra 4 et est associée à un commutateur 7 de telle manière qu'une pression exercée sur la vitre 6 provoque un léger déplacement de celle-ci qui vient alors actionner le commutateur 7. Le commutateur 7 est relié à l'organe de changement de focale 5 pour commander celui-ci et possède un premier état dans lequel il commande le passage à la première focale et un deuxième état dans lequel il commande le passage à la deuxième focale. Le passage du commutateur de son premier état à son deuxième état est obtenu lorsqu'une pression est exercée sur la vitre 6 et le passage du commutateur de son deuxième état à son premier état est obtenu lorsque la pression sur la vitre 6 cesse.

La caméra numérique 4 est reliée à une unité de traitement 8 incorporant un système de reconnaissance automatique de visage 9 et un système de reconnaissance automatique d'empreinte 10. L'unité de traitement 8 est ici un dispositif informatique. Le système de reconnaissance automatique de visage 9 comprend une base de données contenant des caractéristiques dimensionnelles des visages des personnes autorisées à accéder au local et un module de comparaison des caractéristiques du visage visualisé avec celles mémorisées. Le système de reconnaissance automatique d'empreinte 10 comprend une base de données contenant des caractéristiques des empreintes digitales des personnes autorisées à accéder au local et un module de comparaison des caractéristiques des empreintes digitales visualisées avec celles mémorisées.

L'unité de traitement 8 est également reliée à un écran de visualisation 11 et à la serrure 2 pour commander celle-ci.

La caméra étant commandée dans sa première focale, lorsqu'une personne arrive vers la porte 1 la caméra envoie au moins une image du visage de cette personne à l'unité de traitement 8. Le système de reconnaissance automatique de visage 9 compare alors les caractéristiques du visage visualisé aux caractéristiques contenues dans la base de données.

Si les caractéristiques du visage visualisé correspondent à celles d'un des visages contenu dans la base de données, l'unité de traitement 8 commande le déverrouillage de la serrure 2.

Si au contraire les caractéristiques du visage visualisé ne correspondent pas à celles mémorisées dans la base de données du système de reconnaissance automatique de visage 9, la personne désirant accéder au local est informée, par exemple par l'allumage commandé par l'unité de traitement d'un voyant situé près de la porte 1, qu'elle doit appuyer sa main contre la vitre 6. Ce faisant, la personne actionne le commutateur 7 qui passe dans son deuxième état et commande à l'organe de changement de focale 5 de passer dans la deuxième focale de visualisation d'empreinte. Une image des empreintes digitales de la personne est alors envoyée à l'unité de traitement 8. Le système de reconnaissance automatique d'empreinte 10 compare alors les caractéristiques des empreintes digitales visualisées à celles contenues dans sa base de données.

Si les caractéristiques des empreintes digitales de la personne correspondent à celles d'empreintes digitales mémorisées dans la base de données, l'accès de la personne est autorisé.

Si au contraire les caractéristiques des empreintes digitales ne correspondent à aucune de celles mémorisées, l'unité de traitement 8 envoie un message à l'utilisateur, par exemple au moyen d'un voyant, lui demandant de retirer sa main de la vitre. Le commutateur 7 passe alors dans son premier état et commande à l'organe de changement de focale 5 de passer dans la première focale de visualisation de visage. L'unité de traitement 8 relaie alors les images du visage de la personne à l'écran 11 pour permettre à un opérateur d'identifier cette personne visuellement et éventuellement de lui demander de décliner son identité par l'intermédiaire d'un dispositif de communication à distance.

En variante, l'unité de traitement 8 peut commander directement l'organe de changement de focale 5 de telle manière que lorsque la reconnaissance automatique de visage échoue, l'unité de traitement 8 commande le passage à la deuxième focale pour permettre une reconnaissance automatique d'empreinte par le système de reconnaissance automatique d'empreinte 10 et que, si la reconnaissance automatique d'empreinte échoue, l'unité de traitement 8 commande le passage à la première focale pour permettre une reconnaissance visuelle par un opérateur.

Bien entendu, l'invention n'est pas limitée au mode de réalisation décrit et on peut y apporter des variantes de réalisation sans sortir du cadre de l'invention tel que défini par les revendications.

En particulier, la vitre 6 peut être agencée pour former un écran tactile commandant l'organe de changement de focale.

En outre, le dispositif peut ne comprendre qu'un système de reconnaissance automatique d'empreinte, les images fournies par la caméra réglée dans la focale de visualisation de visage étant systématiquement relayées à l'écran 11 pour une observation visuelle par un opérateur.

Par ailleurs, l'invention peut également s'appliquer au contrôle d'accès aux immeubles d'habitation. Le dispositif permet alors avantageusement d'autoriser l'accès des habitants de l'immeuble automatiquement par reconnaissance des empreintes et d'autoriser l'accès des visiteurs par observation visuelle de ceux-ci par l'habitant concerné par la visite.

## Revendications

1. Dispositif d'identification optique comprenant une caméra numérique (4) possédant un organe de changement de focale (5) entre au moins une focale d'observation visuelle et une focale de reconnaissance d'empreinte, et un système de reconnaissance automatique d'empreinte (10) qui est relié à la caméra pour être activé lorsque la caméra est dans la focale de reconnaissance d'empreinte, **caractérisé en ce qu'**il comprend une vitre (6) montée devant la caméra (4) et associée à des moyens (7) de commande de l'organe de changement de focale (5).

2. Dispositif d'identification optique selon la revendication 1, **caractérisé en ce qu'**il comprend un système de reconnaissance automatique de visage (9) relié à la caméra pour être activable lorsque la caméra est dans la focale d'observation visuelle.

3. Dispositif d'identification optique comprenant une caméra numérique (4), possédant un organe de changement de focale (5) entre au moins une focale d'observation visuelle et une focale de reconnaissance d'empreinte, et un système de reconnaissance automatique d'empreinte (10) qui est relié à la caméra pour être activé lorsque la caméra est dans la focale de reconnaissance d'empreinte, et un système de reconnaissance automatique de visage (9) relié à la caméra pour être activable lorsque la caméra est dans la focale d'observation visuelle, **caractérisé en ce qu'**il comporte des moyens (8) pour commander l'organe de changement de focale (5) pour passer de la focale d'observation visuelle à la focale de reconnaissance d'empreinte en cas d'échec de la reconnaissance automatique de visage et de la focale de reconnaissance d'empreinte à la focale d'observation visuelle en cas d'échec de la reconnaissance automatique d'empreinte.

4. Dispositif d'identification optique selon la revendication 3, **caractérisé en ce qu'**il comprend une vitre (6) montée devant la caméra (4) et associée à des moyens (7) de commande de l'organe de changement de focale (5).

5. Dispositif d'identification optique selon la revendication 3, **caractérisé en ce qu'**il comprend des moyens (8) pour commander l'organe de changement de focale (5) pour passer de la focale de reconnaissance d'empreinte à la focale d'observation visuelle sans reconnaissance automatique de visage en cas d'échec de la reconnaissance automatique de visage et de la reconnaissance automatique d'empreinte.

6. Dispositif d'identification optique selon l'une quelconque des revendications précédentes, **caractérisé en ce qu'**il est associé à un dispositif d'autorisation d'accès (2) pour commander celui-ci.

## Claims

1. An optical identification device comprising a digital camera (4) possessing a focal length changing member (5) for changing between at least one visual-observation focal length and one print-recognition focal length, and a system (10) for automatic print recognition which is connected to the camera so as to be activated when the camera has adopted its print-recognition focal length, **characterized in that** it includes a window (6) mounted in front of the camera (4) and associated with means (7) for controlling the focal length changing member (5).

2. An optical identification device according to claim 1, **characterized in that** it includes a system (9) for automatic face recognition connected to the camera to be activatable when the camera has adopted its visual-observation focal length.

3. An optical identification device comprising a digital camera (4) possessing a focal length changing member (5) for changing between at least one visual-observation focal length and one print-recognition focal length, and a system (10) for automatic print recognition which is connected to the camera so as to be activated when the camera has adopted its print-recognition focal length, **characterized in that** it includes means (8) for causing the focal length changing member (5) to change from the visual-observation focal length to the print-recognition focal length in the event of automatic face recognition failing, and from the print-recognition focal length to the visual-observation focal length in the event of automatic print recognition failing.

4. An optical identification device according to claim 3, **characterized in that** it includes a window (6) mounted in front of the camera (4) and associated with means (7) for controlling the focal length changing member (5).

5. An optical identification device according to claim 3, **characterized in that** it includes means (8) for causing the focal length changing member (5) to switch from the print-recognition focal length to the visual-observation focal length without automatic face recognition in the event of both automatic face recognition and automatic print recognition failing.

6. An optical identification device according to any preceding claim, **characterized in that** it is associated with a device for authorizing access (2) in order to control said device.

## Patentansprüche

1. Vorrichtung zur optischen Identifizierung, umfassend eine Digitalkamera (4), die ein Element (5) zum Brennweitenwechsel zwischen mindestens einer Brennweite für eine visuelle Beobachtung und einer Brennweite für eine Fingerabdruckerkennung hat, sowie umfassend ein System (10) zur automatischen Fingerabdruckerkennung, das mit der Kamera verbunden ist, um aktiviert zu werden, wenn die Kamera in der Brennweite für die Fingerabdruckerkennung ist, **dadurch gekennzeichnet, dass** sie eine Scheibe (6) umfasst, die vor der Kamera (4) angebracht und mit Mitteln (7) zum Steuern des Elements (5) zum Brennweitenwechsel verbunden ist.

2. Vorrichtung zur optischen Identifizierung nach Anspruch 1, **dadurch gekennzeichnet, dass** sie ein System (9) zur automatischen Gesichtserkennung umfasst, das mit der Kamera verbunden ist, um aktiviert werden zu können, wenn die Kamera in der Brennweite für die visuelle Beobachtung ist.

3. Vorrichtung zur optischen Identifizierung, umfassend eine Digitalkamera (4), die ein Element (5) zum Brennweitenwechsel zwischen mindestens einer Brennweite für die visuelle Beobachtung und einer Brennweite für die Fingerabdruckerkennung hat, sowie umfassend ein System (10) zur automatischen Fingerabdruckerkennung, das mit der Kamera verbunden ist, um aktiviert zu werden, wenn die Kamera in der Brennweite für die Fingerabdruckerkennung ist, und ein System (9) zur automatischen Gesichtserkennung, das mit der Kamera verbunden ist, um aktiviert werden zu können, wenn die Kamera in der Brennweite für die visuelle Beobachtung ist, **dadurch gekennzeichnet, dass** sie Mittel (8) für die Steuerung des Elements (5) zum Brennweitenwechsel umfasst, um im Falle eines Misslingens der automatischen Gesichtserkennung von der Brennweite für die visuelle Beobachtung in die Brennweite für die Fingerabdruckerkennung zu wechseln, und im Falle eines Misslingens der automatischen Fingerabdruckerkennung von der Brennweite für die Fingerabdruckerkennung in die Brennweite für die visuelle Beobachtung zu wechseln.

4. Vorrichtung zur optischen Identifizierung nach Anspruch 3, **dadurch gekennzeichnet, dass** sie eine Scheibe (6) umfasst, die vor der Kamera (4) angebracht und mit Mitteln (7) zum Steuern des Elements (5) zum Brennweitenwechsel verbunden ist.

5. Vorrichtung zur optischen Identifizierung nach Anspruch 3, **dadurch gekennzeichnet, dass** sie Mittel (8) zum Steuern des Elements (5) zum Brennweitenwechsel umfasst, um im Falle eines Misslingens der automatischen Gesichtserkennung und der automatischen Fingerabdruckerkennung von der Brennweite für die Fingerabdruckerkennung in die Brennweite für die visuelle Beobachtung ohne automatische Gesichtserkennung zu wechseln.

6. Vorrichtung zur optischen Identifizierung nach einem der vorhergehenden Ansprüche, **dadurch gekennzeichnet, dass** sie mit einer Vorrichtung (2) zur Zugangsberechtigung verbunden ist, um diese zu steuern.
